# EUROPÄISCHE PATENTSCHRIFT

(11) **EP 0 591 779 B1**
(45) Veröffentlichungstag und Bekanntmachung des Hinweises auf die Patenterteilung: **11.06.1997**
(21) Anmeldenummer: 93115402.5
(22) Anmeldetag: 24.09.1993
(51) Int. Cl.: B29C 45/76

(54) **Messtechnische Einrichtung zur berührungslosen kontinuierlichen Erfassung einer linearen achsialen Bewegung eines um diese Achse rotierenden Systems an einer Spritzeinheit einer Spritzgiessmaschine**
Measuring device for contactless and continuous sensing of a linear axial motion of a system rotating around this axis for the injection unit of an injection moulding machine
Dispositif technique de mesure pour la saisie de manière continue et sans contact d'un déplacement linéaire et axial d'un système tournant autour de cet axe pour l'unité d'injection d'une machine à mouler par injection

(30) Priorität: 06.10.1992 DE 4233501
(43) Veröffentlichungstag der Anmeldung: 13.04.1994
(73) Patentinhaber: Hemscheidt Maschinentechnik Schwerin GmbH & Co., 19061 Schwerin (DE)
(72) Erfinder: Lüdtke, Klaus, Dipl.-Ing., D-19063 Schwerin (DE); Mewes, Ralf, Dipl.-Ing., D-16816 Neuruppin (DE)
(74) Vertreter: Jaap, Reinhard

(56) Entgegenhaltungen:
- US-A- 3 956 973
- US-A- 5 050 135
- DATABASE WPI Section EI, Week 9203, Januar 1992 Derwent Publications Ltd., London, GB; Class V02, AN 92-020651 [03] & JP-A-3 270 001 (KANEGAFUCHI CHEM KK) 2. Dezember 1991
- PATENT ABSTRACTS OF JAPAN vol. 6, no. 074 (M-127)11. Mai 1982 & JP-A-57 014 454 (TOSHIBA MACH CO LTD)
- PATENT ABSTRACTS OF JAPAN vol. 9, no. 215 (M-409)3. September 1985 & JP-A-60 076 267 (UBE KOSAN KK)

## Beschreibung

Die Erfindung betrifft eine meßtechnische Einrichtung zur berührungslosen kontinuierlichen Erfassung der linearen achsialen Bewegung eines um eine Rotationsachse rotierenden Systems, insbesondere an einer Spritzeinheit einer Spritzgießmaschine. Das rotierende System besteht dabei aus einem Spritzkolben, der in einem stationären Spritzzylinder über einen Rotationsantrieb und eine Schneckenkupplung, die Plastifizierschnecke der Plastifiziereinheit antreibt. Vom rotierenden System wird während der Einspritzbewegung und der Rückzugsbewegung der Plastifizierschnecke die lineare achsiale Bewegung ausgeführt. Dazu ist die Spritzeinheit über ein Verbindungsgehäuse mit der Plastifiziereinheit verbunden. Die meßtechnische Einrichtung ist außerhalb der Rotationsachse der Plastifizierschnecke angeordnet und besteht aus einem Wegaufnehmer und einem Positionsgeber.

Aus der industriellen Praxis, beim Betrieb einer Spritzgießmaschine zur Kunststoffverarbeitung, sind lineare Wegmeßsysteme bekannt. Dabei wird über eine mechanische Einrichtung, die translatorische Bewegung eines Wegpunktes, z. B. die Einspritzbewegung während der Rotationsbewegung der Plastifizierschnecke, außerhalb der Rotationsachse des zu messenden Systems, in eine reine lineare Bewegung überführt. Mit den bisher bekannten Meßsystemen wird dann z. B. mit Hilfe von Linearpotentiometern eine berührungsbehaftete bzw. mit Hilfe von Ultraschallwegaufnehmern bzw. mit optischen Wegmeßsystemen eine berührungslose Erfassung der Meßdaten vorgenommen.

In dem Fachbuch "Spritzgießen" Carl Hanser Verlag München Wien 1979 ist auf S. 222/223 im Bild 6.8 und 6.9 schematisch ein mechanisches lineares Wegmeßsystem dargestellt.

Der Nachteil dieser bekannten Meßmethoden besteht in dem sehr hohen technischen Aufwand bei der mechanischen Übersetzung der translatorischen Bewegung des rotierenden Systems in eine lineare Bewegung. Hinzu kommt, daß durch vorhandene Ungenauigkeiten bei der mechanischen Übersetzung der Bewegungsabläufe Meßfehler auftreten. Weitere Nachteile dieses Meßsystems sind die relativ geringe Lebensdauer dieser Meßsysteme infolge Störanfälligkeit gegen Verschmutzung und Vibration und damit verbunden ist ein hoher Wartungsaufwand.

Ferner sind aus Prospektunterlagen der Firma T + R Elektronik GmbH Prospekt LP-38-4/92 bzw. der Firma MTS-Sensor Technologie GmbH & Co. KG Prospekt MTS-DbLP-92Dl für den Einsatz in linearen Wegmeßsystemen berührungslos arbeitende magnetostriktive Wegsensoren bekannt. Diese haben jedoch den Nachteil, daß sie nur für die Messung linearer Bewegungen, jedoch nicht für lineare achsiale Bewegungen eines rotierenden Systems einsetzbar sind.

Ziel der Erfindung ist die Entwicklung einer kostengünstigen funktionssicheren, wartungsfreien und von äußeren Betriebseinflüssen unabhängigen meßtechnischen Einrichtung. Die Aufgabe der Erfindung besteht darin, eine meßtechnische Einrichtung bestehend aus Wegaufnehmer und Positionsgeber zu schaffen, mit der berührungslos und kontinuierlich die lineare achsiale Bewegung eines rotierenden Systems außerhalb der Rotationsachse erfaßbar ist.

Erfindungsgemäß wird die Aufgabe gemäß Anspruch 1 gelöst. In einer Ausführungsform der Erfindung besteht der radial magnetisierte Ringmagnet aus einem flexiblen Dauermagneten.

Die Vorteile der erfindungsgemäßen Lösung bestehen in einer kostengünstigen und funktionssicheren Meßeinrichtung mit der unabhängig von äußeren Einflüssen berührungslos und kontinuierlich die lineare achsiale Bewegung eines rotierenden Systems mit einer verbesserten Genauigkeit meßbar ist.

Die Erfindung wird nachstehend in einem Ausführungsbeispiel näher erläutert werden. In der Zeichnung ist dargestellt:

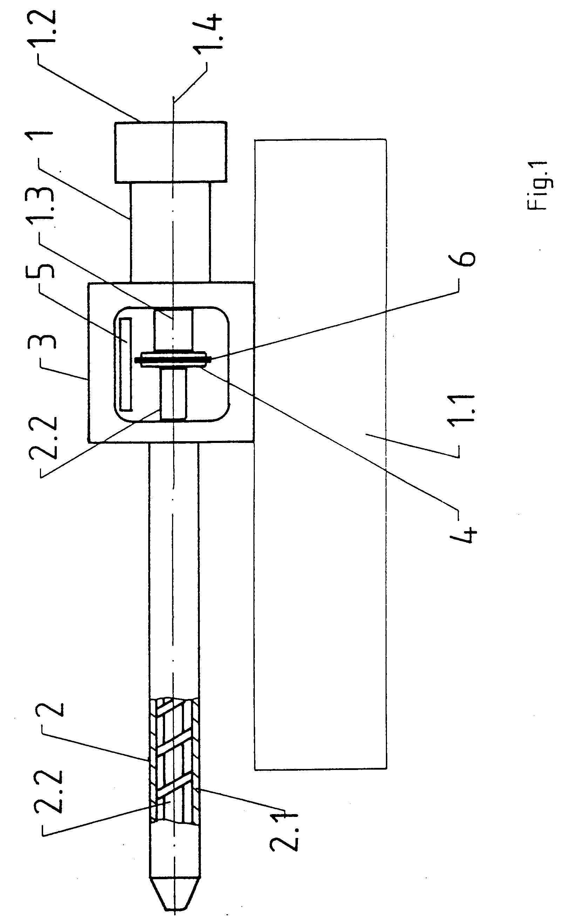

- Fig. 1: Spritzeinheit und Plastifiziereinheit für eine Spritzgießmaschine zur Kunststoffverarbeitung in der Vorderansicht

In der einzigen Zeichnung ist in der Vorderansicht eine Spritzeinheit 1, die auf einem Untersatz 1.1 montiert ist und über ein Verbindungsgehäuse 3 mit der Plastifiziereinheit 2 verbunden ist, erkennbar. Die Spritzeinheit 1 besitzt einen Rotationsantrieb 1.2, der z. B. als Hydromotor ausgebildet sein kann. Das rotierende System besteht aus dem Rotationsantrieb 1.2, der über den Spritzkolben 1.3 und die Schneckenkupplung 4 mit der Plastifizierschnecke 2.2 verbunden ist. Die Plastifizierschnecke ist im stationären Plastifizierzylinder 2.1, die beide die Plastifiziereinheit 2 bilden, drehbar gelagert. Die Plastifiziereinheit 2 und die Spritzeinheit 1 sind über das Verbindungsgehäuse 3 miteinander fest verbunden. Das rotierende System führt während des Plastifiziervorganges eine rotierende Bewegung aus, die während der Einspritzbewegung, bei der das aufgeschmolzene Plastmaterial in das Formwerkzeug eingespritzt wird und während der Rückzugsbewegung des rotierenden Systems, von einer linearen achsialen Bewegung überlagert wird. Zur berührungslosen Erfassung dieser Bewegungsabläufe ist erfindungsgemäß im Verbindungsgehäuse 3 parallel zur Rotationsachse 1.4 als Wegaufnehmer der magnetostriktive Ultraschall-Wegsensor 5 angeordnet. Der dazugehörige berührungslose Positionsgeber besteht aus einem radial magnetisierten Ringmagneten 6, der am Umfang des rotierenden Systems, z. B. im Bereich der Schneckenkupplung 4, angeordnet ist. Der Ringmagnet 6 kann vorzugsweise aus einem flexiblen Dauermagnetstreifen bestehen, der ohne zusätzlichen mechanischen Aufwand an dem zu messenden rotierenden System befestigt werden kann.

Entsprechend dem Prinzip des magnetostriktiven Ultraschallwegsensors wird die Laufzeit des Torsionsimpulses des Wellenleiters gemessen, der durch das Zusammenwirken zweier Magnetfelder entsteht. Ein Stromimpuls erzeugt ein Magnetfeld im Wellenleiter, das zweite Magnetfeld wird durch den radialmagnetisierten Ringmagneten erzeugt. Durch die jeweilige achsiale Lage des Ringmagneten entsteht unabhängig von der Rotation des Systems ein den absoluten Weg darstellendes Signal.

### Aufstellung der verwendeten Bezugszeichen

- 1.: - Spritzeinheit
- 1.1: - Untersatz
- 1.2: - Rotationsantrieb
- 1.3: - Spritzkolben
- 1.4: - Rotationsachse
- 2.: - Plastifiziereinheit
- 2.1: - Plastifizierzylinder
- 2.2: - Plastifizierschnecke
- 3.: - Verbindungsgehäuse
- 4.: - Schneckenkupplung
- 5.: - Ultraschallwegsensor
- 6.: - Ringmagnet

## Patentansprüche

1. Meßtechnische Einrichtung zur berührungslosen kontinuierlichen Erfassung der linearen achsialen Bewegung eines um eine Rotationsachse rotierenden Systems an einer Spritzeinheit (1) einer Spritzgießmaschine, bestehend aus einem Spritzkolben (1.3), der in einem stationären Spritzzylinder angeordnet ist und über einen Rotationsantrieb und eine Schneckenkupplung die Plastifizierschnecke (2.2) der Plastifiziereinheit (2) antreibt, wobei die Spritzeinheit (1) über ein Verbindungsgehäuse mit der Plastifiziereinheit (2) verbunden ist, die meßtechnische Einrichtung außerhalb der Rotationsachse der Plastifizierschnecke angeordnet ist und aus einem Wegaufnehmer und einem Positionsgeber besteht, dadurch gekennzeichnet, daß als Wegaufnehmer ein an sich bekannter magnetostriktiver Ultraschall-Wegsensor (5) verwendet wird, der parallel zur Rotationsachse (14) im Verbindungsgehäuse (3) für die Plastifiziereinheit (2) und Spritzeinheit (1) angeordnet ist und im Bereich der Schneckenkupplung (4) am Umfang des rotierenden Systems als Positionsgeber ein an sich bekannter radial magnetisierter Ringmagnet (6) angeordnet ist.

2. Meßtechnische Einrichtung nach Anspruch 1, dadurch gekennzeichnet, daß der radial magnetisierte Ringmagnet (6) aus einem flexiblen Dauermagneten besteht.

## Claims

1. Metrological device for non-contact, continuous detection of the linear, axial motion of a system, rotating about an axis of rotation, of an injection unit (1) of an injection moulding machine, comprising an injection ram (1.3), which is disposed in a stationary injection cylinder and via a rotary drive and a worm coupling drives the plasticizing worm (2.2) of the plasticizing unit (2), wherein the injection unit (1) is connected by a connecting housing to the plasticizing unit (2) and the metrological device is disposed outside of the axis of rotation of the plasticizing worm and comprises a displacement sensor and a position encoder, characterized in that, as a displacement sensor, a known magnetostrictive ultrasonic displacement sensor (5) is used, which is disposed parallel to the axis of rotation (14) in the connecting housing (3) for the plasticizing unit (2) and injection unit (1) and, as a position encoder, a known radially magnetized ring magnet (6) is disposed in the region of the worm coupling (4) at the periphery of the rotating system.

2. Metrological device according to claim 1, characterized in that the radially magnetized ring magnet (6) comprises a flexible permanent magnet.

## Revendications

1. Installation de métrologie pour saisir, en continu et sans contact, le mouvement axial linéaire d'un système tournant autour d'un axe de rotation d'une unité d'injection (1) d'une machine d'injection composée d'un piston d'injection (1.3) logé dans un cylindre d'injection fixe et entraînant, par un entraînement de rotation et un embrayage à vis, la vis à plastifier (2.2) de l'unité de plastification (2),
- l'unité d'injection (1) étant reliée à l'unité de plastification (2) par un boîtier de liaison,
- l'installation de métrologie étant à l'extérieur de l'axe de rotation de la vis à plastifier et elle se compose d'un capteur de course et d'un capteur de position,
caractérisée en ce que
le capteur de course est un capteur de course à ultrasons (5) à magnétostriction, connu en soi, ce capteur étant monté parallèlement à l'axe de rotation (14) dans le boîtier de liaison (3) de l'unité de plastification (2) et de l'unité d'injection (1)
- et au niveau de l'embrayage à vis (4), à la périphérie du système rotatif, il est prévu comme capteur de position, un aimant annulaire (6), aimanté de manière radiale, de façon connue en soi.

2. Installation selon la revendication 1,
caractérisée en ce que
l'aimant annulaire (6) à aimantation radiale est formé d'un aimant permanent souple.
